# EUROPÄISCHE PATENTANMELDUNG

(11) **EP 0 751 662 A2**
(43) Veröffentlichungstag der Anmeldung: **02.01.1997**
(21) Anmeldenummer: 96108544.6
(22) Anmeldetag: 29.05.1996
(51) Int. Cl.: H04M 15/00

(54) **Verfahren zur Gebühreninformation sowie Dienststeuereinrichtung, Teilnehmervermittlungsstelle, Endgerät und Kommunikationsnetz**

(30) Priorität: 28.06.1995 DE 19522988
(71) Anmelder: Alcatel SEL Aktiengesellschaft, D-70435 Stuttgart (DE); ALCATEL N.V., NL-2288 BH Rijswijk (NL)
(72) Erfinder: Lautenschlager, Wolfgang, 71287 Weissach (DE); Stahl, Uwe, 71229 Leonberg (DE)
(74) Vertreter: Brose, Gerhard, Dipl.-Ing.

(57) **Zusammenfassung**

Die Erfindung betrifft ein Verfahren zur Information eines Teilnehmers eines Kommunikationsnetzes über Gebühren einer gewünschten Verbindung sowie eine Dienststeuereinrichtung (SCP), eine Teilnehmervermittlungsstelle, ein Endgerät (TA) und ein Kommunikationsnetz zur Durchführung dieses Verfahrens. Ein Teilnehmer signalisiert einen die gewünschte Verbindung spezifizierenden Verbindungswunsch über das Endgerät (TA) an das Kommunikationsnetz. Aus dem Verbindungswunsch werden sodann durch die Dienststeuereinrichtung (SCP) oder durch die Teilehmervermittlungsstelle Tarifierungsdaten (T), die die Kosten der gewünschten Verbindung betreffen, unabhängig vom Aufbau der gewünschten Verbindung ermittelt. Die Tarifierungsdaten (T) werden dann vor dem Aufbau der gewünschten Verbindung an das Endgerät (TA) gesendet, das die Daten sodann dem Teilnehmer mittels einer Anzeigeneinheit als Tarifierungsdaten anzeigt.

## Beschreibung

Die Erfindung betrifft ein Verfahren zur Information eines Teilnehmers eines Kommunikationsnetzes über Gebühren einer gewünschten Verbindung nach dem Oberbegriff von Anspruch 1, eine Dienststeuereinrichtung zum Anschluß an ein Kommunikationsnetz nach dem Oberbegriff von Anspruch 9 sowie eine Teilnehmervermittlungsstelle, ein Endgerät und ein Kommunikationsnetz nach dem Oberbegriff von Anspruch 10, 11 bzw. 13.

Von Seiten der Teilnehmer eines Kommunikationsnetzes besteht das Bedürfnis, sich über die Kosten der von ihnen in Anspruch genommenen Kommunikationsdienstleistungen zu informieren.

Die Erfindung geht nun von der heute üblichen teilnehmerseitigen Gebühreninformation aus. Diese wird beispielsweise in Bezug auf die vom Kommunikationsnetz zu erbringenden Funktionen in dem Kapitel "II.3.4 Fernvermittlungssystem" des Buches "Grundlagen der Vermittlungstechnik" von G. Siegmund, herausgegeben vom R. v. Decker's Verlag, G. Schenk, Heidelberg 1991, auf den Seiten 92 bis 94 beschrieben. Die hierfür von einem Endgerät zu erbringenden Funktionen sind beispielsweise in dem Kapitel 7.1.0.0 "Telephonapparate" des Buches "Handbuch der Telekommunikation" von Franz Arnold, herausgegeben vom Deutschen Wirtschaftsdienst auf den Seiten 12 und 13 beschrieben.

Zur teilnehmerseitigen Gebühreninformation werden, wie von Franz Arnold beschrieben, dem Endgerät, dessen Teilnehmer die Kosten einer Verbindung zu tragen hat, von der mit ihm verbundenen Teilnehmervermittlungsstelle während des Bestehens einer Verbindung Zählimpulse zugesendet. Diese Zählimpulse werden im Nutzkanal übertragen und die Anzahl der gesendeten Zählimpulse ist ein Maß für die Kosten der Verbindung. Sie werden in dem Endgerät des Teilnehmers erkannt, gezählt und die aufgelaufene Summe dem Teilnehmer als Gebühreninformation angezeigt. Die Zählimpulse selbst werden, wie von G. Siegmund beschrieben, von einem Zählimpulsgeber der Teilnehmervermittlungsstelle erzeugt, der von einem in der Knotenvermittlungsstelle angesiedelten Umwerter gesteuert wird. Dieser Umwerter bestimmt den Leitweg einer Verbindung und die diesem Leitweg zugeordnete Gebührenzone. Der Zählimpulsgeber wird von ihm entsprechend der von ihm bestimmten Gebührenzone eingestellt.

Diese Art der Gebühreninformation des Teilnehmers hat den Nachteil, daß hierfür speziell ausgestaltete Endgeräte benötigt werden.

Darüberhinaus ist noch aus dem Patent US 5,345,502 ein Verbindungsaufbauverfahren bekannt, das Gebührentarife für die Auswahl von Verbindungswegen verwendet.

Dieses Verbindungsaufbauverfahren dient dem Aufbau einer Verbindung zwischen zwei Endgeräten für mobile Teilnehmer eines Netzverbundes aus einer Vielzahl virtueller privater dienstintegrierender Netze und öffentlicher Netze. Bei diesem Verfahren wird der gerufene Teilnehmer von einem Dienst mittels einer Besucher- oder einer Heimatdatei lokalisiert. Sind mehrere Verbindungswege möglich, so können zur Auswahl eines der Verbindungswege unter anderem Gebührentarife der Verbindungswege als Entscheidungskriterium herangezogen werden.

Eine Information des Teilnehmers über die Kosten eines Gespräches erfolgt bei diesem Verbindungsaufbauverfahren jedoch nicht.

Der Erfindung liegt nun die Aufgabe zugrunde, den Teilnehmer über Kosten einer Telekommunikationsdienstleistung zu informieren.

Diese Aufgabe wird gelöst durch ein Verfahren zur Gebühreninformation nach der Lehre von Anspruch 1, sowie durch eine Dienststeuereinrichtung, eine Teilnehmervermittlungsstelle, ein Endgerät und ein Kommunikationsnetz nach der Lehre von Anspruch 9, 10, 11 bzw. 13.

Der Erfindung liegt die Erkenntnis zugrunde, daß sich die Komplexität der Gebührenstruktur für Kommunikationsdienstleistungen mit der Zunahme der Anzahl der Netzbetreiber und der Einführung von Mehrwertdiensten sprunghaft erhöhen wird. Der Grundgedanke der Erfindung ist es, bereits vor dem Aufbau einer Verbindung aus einem Verbindungswunsch, der von einem Teilnehmer an das Kommunikationsnetz gesendet wird, Tarifierungsdaten unabhängig vom Verbindungsaufbau zu ermitteln und an den Teilnehmer zu senden.

Damit wird es dem Teilnehmer möglich, sich bereits vor der Inanspruchnahme einer Kommunikationsdienstleistung und ggf. einer zusätzlichen Mehrwertdienstleistung über deren Kosten zu informieren und u.U. die Kommunikationsdienstleistung gar nicht in Anspruch zu nehmen.

Weiter ergibt sich der Vorteil, daß sich so die Gebührensicherheit bei Gesprächen und Diensten erhöht.

Weiter ergibt sich der Vorteil, daß für die Durchführung des erfindungsgemäßen Verfahrens zur Gebühreninformation keine speziell ausgestatteten Endgeräte erforderlich sind, wie dies bisher der Fall war. Da die Gebühreninformation vor Aufbau des Nutzkanals zum Zielteilnehmer erfolgt, kann die Gebühreninformation durch Sprachansage im Nutzkanal erfolgen.

Vorteilhafte Ausgestaltungen der Erfindung sind den Unteransprüchen zu entnehmen.

Es ist hierbei insbesondere vorteilhaft, den Verbindungswunsch zunächst an einen Dienst des Kommunikationsnetzes zu leiten, der sodann die Ermittlung der Gebühreninformation sowie die Information des Teilnehmers übernimmt und danach den weiteren Verbindungsaufbau veranlaßt. Damit wird eine kostengünstige und schnell zu implementierende Lösung für die Bereitstellung der Erfindung in der bestehenden Netzstruktur angegeben.

Ein weiterer Vorteil der Erfindung ist, daß die Gebühreninformation eines Teilnehmers auf einfache Weise mit zusätzlichen Leistungsmerkmalen ausgestattet werden kann. Ein Beispiel hierfür ist die Auswahl des kostengünstigsten Verbindungsweges bei mehreren möglichen Verbindungswegen.

Im folgenden wird die Erfindung anhand dreier Ausführungsbeispiele unter Zuhilfenahme beiliegender Zeichnungen näher erläutert.
- Fig. 1: zeigt eine symbolische Darstellung eines erfindungsgemäßen Kommunikationsnetzes mit einer erfindungsgemäßen Dienststeuereinrichtung.
- Fig. 2: zeigt ein Ablaufdiagramm eines Verbindungsaufbaus für das Kommunikationsnetz nach Fig. 1.
- Fig. 3: zeigt ein Blockschaltbild der erfindungsgemäßen Dienststeuereinrichtung nach Fig. 1.
- Fig. 4: zeigt ein Blockschaltbild eines erfindungsgemäßen Endgerätes für das erfindungsgemäße Kommunikationsnetz nach Fig. 1.

In einem ersten Ausführungsbeispiel wird die Anwendung des erfindungsgemäßen Verfahrens zur Gebühreninformation eines Teilnehmers anhand einer Kommunikationsanordnung verdeutlicht, die aus einem erfindungsgemäßen Kommunikationsnetz und einer erfindungsgemäßen Dienststeuereinrichtung besteht.

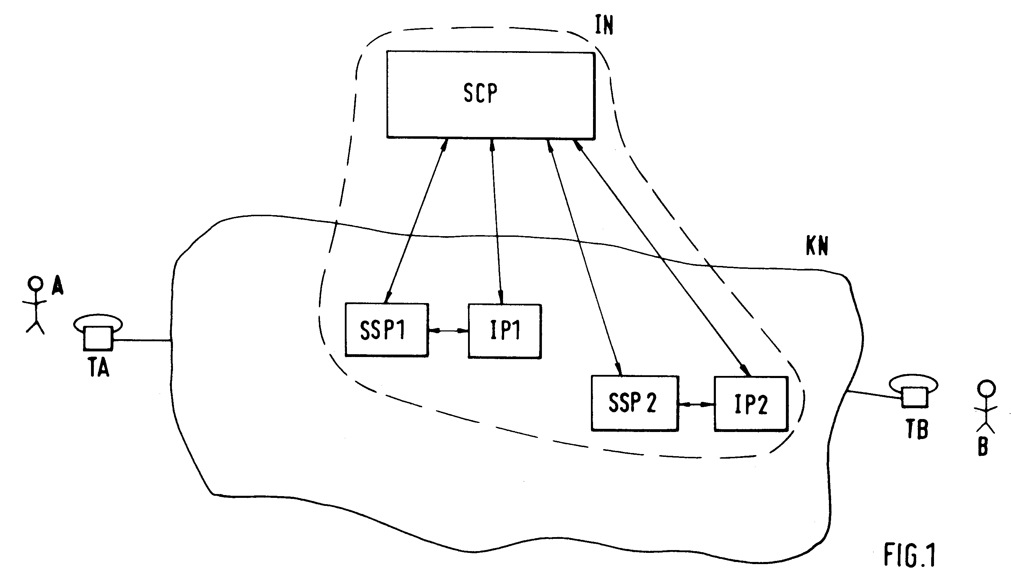

Fig. 1 zeigt die Dienststeuereinrichtung SCP, die Endgeräte TA und TB, die Teilnehmer A und B und das Kommunikationsnetz KN mit den Vermittlungsstellen SSP1 und SSP2 und den Dienstunterstützungssystemen IP1 und IP2.

Die Endgeräte TA und TB sind mit dem Kommunikationsnetz KN verbunden und ihnen ist der Teilnehmer A bzw. B zugeordnet. Die Vermittlungsstellen SSP1 und SSP2 tauschen mit der Dienststeuereinrichtung SCP und mit dem Dienstunterstützungssystem IP1 bzw. IP2 Daten aus. Die Dienstunterstützungssysteme IP1 und IP2 tauschen ihrerseits mit der Dienststeuereinrichtung SCP Daten aus.

Die Endgeräte TA und TB sind für das Kommunikationsnetz KN geeignete Fernsprechapparate. Sie können jedoch auch von einem beliebigen anderen Endgerät für ein Telekommunikationsnetz gebildet werden, beispielsweise von einem Fax oder einem entsprechend ausgestalteten Computer.

Das Kommunikationsnetz KN ist wie ein übliches Fernsprechnetz ausgestaltet und enthält so auch mehrere Vermittlungsstellen. Von diesen Vermittlungsstellen sind die in Fig. 1 gezeigten Vermittlungsstellen SSP1 und SSP2 besonders ausgestaltet. Sie übermitteln beim Auftreten eines Verbindungswunsches mit einer bestimmten Dienstkennung über eine Datenverbindung Anfragen an die Dienststeuereinrichtung SCP und erhalten als Antwort darauf von dieser Anweisung, die die weitere Behandlung des Verbindungswunsches betreffen. Bei dieser Dienstkennung handelt es sich um eine bestimmte Ausscheidenummer oder um eine geeignete andere Information, z.B. um die Rufnummern einer bestimmten Gruppe von Teilnehmern, für die während des Verbindungsaufbaus automatisch eine Gebühreninformation erfolgt.

Es ist auch möglich, daß das Kommunikationsnetz KN aus mehreren untereinander verbundenen Unternetzen gebildet wird. Solche Unternetze können beispielsweise die Netze unterschiedlicher Netzbetreiber, private Netze, öffentliche Netze oder auch Mobilfunknetze sein.

Weiter ist es möglich, daß eine andere Anzahl von Vermittlungsstellen des Kommunikationsnetzes KN wie die Vermittlungsstellen SSP1 und SSP2 ausgestaltet ist. Es ist jedoch mindestens eine solche Vermittlungsstelle notwendig.

Die Dienststeuereinrichtung SCP besteht aus einem oder mehreren miteinander verbundenen Rechnern und peripheren Komponenten, die insbesondere eine Datenkommunikation mit den Vermittlungsstellen SSP1 und SSP2 und mit den Dienstunterstützungssystemen IP1 und IP2 ermöglichen.

Zusammen mit den auch als "Service Switching Points" und "Intelligent Peripherals" bezeichneten Vermittlungsstellen SSP1 und SSP2 bzw. Dienstunterstützungssystemen IP1 und IP2 bildet die auch als "Service Switching Point" bezeichnete Dienststeuereinrichtung ein Intelligentes Netzwerk IN, in dem sie für die Bereitstellung eines Dienstes in dem Kommunikationsnetz KN zusammenarbeiten. Der Aufbau solcher Intelligenter Netze und deren allgemeine Funktionsbeschreibung ist beispielsweise dem Artikel "Intelligent Networks" von W. Rink, aus Nachrichtentech., Elektron., Berlin 40 (1990), Heft 5, Seiten 162-164 zu entnehmen.

Es ist jedoch auch möglich, daß der Dienst nicht mittels eines solchen Intelligenten Netzes erbracht wird. Insbesondere kann die Dienststeuereinrichtung SCP über andere Kommunikationsmechanismen und andere Protokolle mit den Vermittlungsstellen SSP1 und SSP2 verbunden sein.

Die Dienststeuereinrichtung SCP empfängt von den Vermittlungsstellen SSP1 und SSP2 Daten über einen Verbindungswunsch eines Teilnehmers. Mit diesen Daten bestimmt sie sodann Tarifierungsdaten, die die Kosten der gewünschten Verbindung betreffen, und sendet diese Daten sodann über das entsprechende Dienstunterstützungssystem an denjenigen Teilnehmer zurück, der den Verbindungswunsch signalisiert hat.

Die Dienstunterstützungssysteme IP1 und IP2 werden von der Dienststeuereinrichtung SCP gesteuert und besitzen jeweils sowohl eine Nutzkanal-Schnittstelle als auch eine Zeichengabe-Schnittstelle zu der Vermittlungsstelle SSP1 bzw. SSP2. Ihre Aufgabe ist es, die Dienststeuereinrichtung SCP bei der Kommunikation mit einem Endgerät zu unterstützen, indem sie die entsprechenden Kommunikationsfunktionen für den Datenaustausch über den Nutz- und Signalisierungskanal sowie bereits vorab abgespeicherte Sprachansagen und Anzeigetexte bereitstellen. Die genaue Beschreibung der Funktionsweise eines solchen Dienstunterstützungssystems ist beispielsweise dem Artikel "Intelligent peripheral: signaling and protocols" des Tagungsbandes "ISS'92, Oktober 1992, Vol. 2" des "International Switching Symposium 1992" auf den Seiten 117 bis 121 zu entnehmen.

Es ist auch möglich, daß die benötigten Funktionen der Dienstunterstützungssysteme IP1 und IP2 in die Vermittlungsstellen SSP1 und SSP2 integriert sind.

Der Verbindungsaufbau mittels des von dem Intelligenten Netz IN bereitgestellten Dienstes wird nun anhand des Verbindungsaufbaus von dem Endgerät TA des Teilnehmers A zum Endgerät TB des Teilnehmers B beispielhaft erläutert:

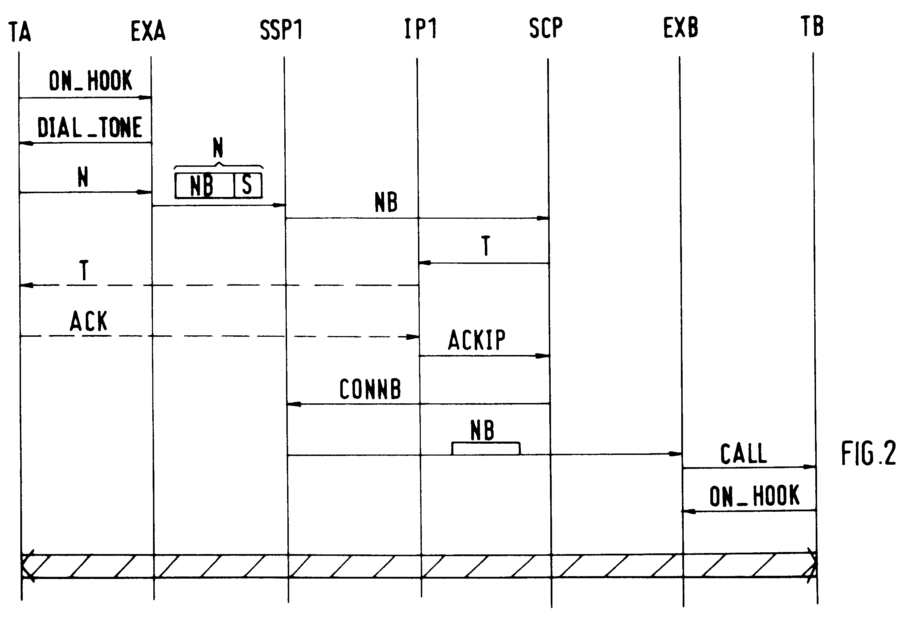

Fig. 2 zeigt ein Ablaufdiagramm, in dem der Nachrichtenaustausch zwischen dem Endgerät TA, einer diesem Endgerät zugeordneten Teilnehmervermittlungsstelle EXA, der Vermittlungsstelle SSP1, dem Dienstunterstützungssystem IP1, der Dienststeuereinrichtung SCP, einer dem Endgerät TB zugeordneten Teilnehmervermittlungsstelle EXB und dem Endgerät TB gegen die Zeit aufgetragen ist.

Der Teilnehmer A hebt ab und das Endgerät TA sendet daraufhin eine Signalisierungsnachricht ON_HOOK an die Teilnehmervermittlungsstelle EXA, die daraufhin einen Wählton DIAL_TONE an das Endgerät TA sendet.

Der Teilnehmer wählt nun eine Rufnummer N. Diese Rufnummer wird entsprechend dem von dem Endgerät TA und dem Kommunikationsnetz KN verwendeten Signalisierungsverfahren als Signalisierungsnachricht DIAL_N an die Teilnehmervermittlungsstelle EXA signalisiert. Die Rufnummer N besteht hierbei aus zwei Nummern NB und S. Die Nummer NB entspricht der Rufnummer des Teilnehmers B in dem Kommunikationsnetz KN. Die Nummer S ist der Nummer NB vorangestellt und entspricht der Dienstkennung des von der Dienststeuervorrichtung SCP bereitgestellten Dienstes.

Ein Verbindungswunsch mit der Rufnummer N wird so entsprechend der Nummer S durch das Kommunikationsnetz KN zu der Vermittlungsstelle SSP1 geleitet. Die Vermittlungsstelle SSP1 ist hier beispielhaft gewählt, der Verbindungswunsch könnte auch an die Vermittlungsstelle SSP2 geleitet werden. Die Vermittlungsstelle SSP1 erkennt die Nummer S als Dienstkennung des von der Dienststeuereinrichtung SCP bereitgestellten Dienstes, unterbricht den weiteren Verbindungsaufbau und sendet eine Nachricht mit der Nummer NB und einer Nummer NA an die Dienststeuereinrichtung SCP. Die Nummer NA entspricht hierbei der Rufnummer des Teilnehmers A.

Es ist auch möglich, anstelle der Nummer NA eine der Vermittlungsstelle EXA entsprechende Kennung zu verwenden oder auf das Senden der Nummer NA ganz zu verzichten.

Die Dienststeuereinrichtung SCP bestimmt nun aus der Nummer NB, die den Verbindungswunsch des Teilnehmers A spezifiziert, und aus der Nummer NA Tarifierungsdaten T, die die Kosten dieser gewünschten Verbindung beschreiben. Sodann sendet sie eine Nachricht mit den Tarifierungsdaten T an das Dienstunterstützungssystem IP1, die dieses anweist, dem Teilnehmer A die Tarifierungsdaten T zuzusenden. Zwischen dem Dienstunterstützungssystem IP1 und dem Endgerät TA wird nun über die Vermittlungsstelle SSP1 ein Nutzkanal aufgebaut. Über diesen Nutzkanal werden die Tarifierungsdaten T mittels Sprachansage zugesendet.

Es ist auch möglich, daß die Tarifierungsdaten dem Endgerät TA in digitaler Form zugesendet werden. Eine solche Übertragung kann beispielsweise über einen Signalisierungskanal oder in kodierter Form über den Nutzkanal stattfinden. Hierfür kann insbesondere der beim ISDN-Signalisierungsverfahren zur Verfügung stehende D-Kanal oder das für die Tonwahl verwendete Kodierungsverfahren eingesetzt werden. In diesen Fällen wäre es jedoch notwendig, daß das Endgerät TA entsprechend ausgerüstet wäre, also beispielsweise über entsprechende Einrichtungen zum Erkennen und Anzeigen solcher Tarifierungsdaten verfügt.

Hat der Teilnehmer A die Tarifierungsdaten T über sein Endgerät TA empfangen, so hat er die Wahlmöglichkeit, den Verbindungsaufbau fortzusetzen oder abzubrechen. Wählt er die Fortsetzung des Verbindungsaufbaus, so sendet er über das Endgerät TA eine Nachricht ACK über den bereits aufgebauten Nutzkanal an das Dienstunterstützungssystem IP1. Die Nachricht ACK besteht hierbei aus einem vom Teilnehmer A gesprochenen Bestätigungswort, das vom Dienstunterstützungssystem IP1 mittels Spracherkennung erkannt wird. Hat das Dienstunterstützungssystem IP1 die Nachricht erkannt, so sendet sie ihrerseits eine Nachricht ACKIP an die Dienststeuereinrichtung SCP.

Es ist auch möglich, daß die Nachricht ACK aus einer im D-Kanal übertragenen digitalen Nachricht oder aus einem im Nutzkanal gesendeten kodierten Signal besteht, beispielsweise aus einem Tonwahlsignal oder einer Folge von Tonwahlsignalen. Solche kodierten Signale können vom Teilnehmer auf einfache Weise durch Betätigen einer oder mehrerer Wahltasten erzeugt werden.

Entscheidet sich der Teilnehmer A gegen eine Fortsetzung des Verbindungsaufbaus, so sendet er über sein Endgerät TA eine andere Nachricht an das Dienstunterstützungssystem IP1. Für diese Nachricht gilt das zur Nachricht ACK gesagt.

Es ist jedoch auch möglich, daß keine solche Nachricht vorgesehen ist. Der Abbruch des weiteren Verbindungsaufbaus würde dann von der Dienststeuereinrichtung SCP nach Ablauf einer bestimmten Zeitspanne oder nach Auflegen des Hörers durch den Teilnehmer A veranlaßt.

Es ist auch möglich, auf die Nachricht ACK zu verzichten. Eine Fortsetzung des weiteren Verbindungsaufbaus zum Teilnehmer B würde dann von der Dienststeuereinrichtung SCP sofort nach oder eine bestimmte Zeitspanne nach Senden der Tarifierungsdaten T veranlaßt. Der Abbruch einer unerwünschten Verbindung durch den Teilnehmer A wäre hierbei dadurch möglich, daß der Teilnehmer A den Hörer auflegt.

Hat die Dienststeuereinrichtung SCP die Nachricht ACKIP empfangen, so veranlaßt sie die Fortsetzung des Verbindungsaufbaus durch die Vermittlungsstelle SSP1, indem sie dieser eine Nachricht CONNB sendet. Ein Verbindungswunsch mit der Nummer NB als Rufnummer wird so durch das Kommunikationsnetz KN zur Teilnehmervermittlungsstelle EXB geleitet, die dann den Teilnehmer A durch Senden eines Rufes CALL über den Verbindungswunsch informiert. Hebt der Teilnehmer B ab, so wird eine Signalisierungsnachricht ON_HOOK vom Endgerät TB an die Teilnehmervermittlungsstelle EXB gesendet, wodurch dann ein Nutzkanal CH zwischen den Endgeräten TA und TB aufgebaut wird.

Es ist auch möglich, daß die Dienststeuereinrichtung SCP nicht die Fortsetzung des Verbindungsaufbaus veranlaßt sondern sich auf die Information des Teilnehmers A über die Kosten des Verbindungswunsches beschränkt.

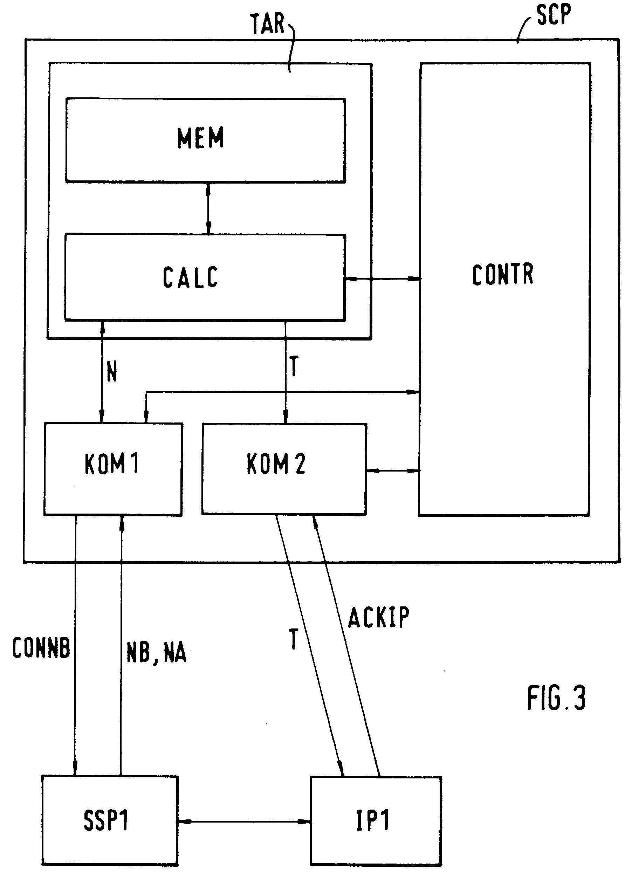

Weiter ist es möglich, die Inanspruchnahme dieses Verfahrens mit einer Gebühr zu versehen.
Im Folgenden wird der genauere Aufbau der Dienststeuereinrichtung SCP anhand von Fig. 3 näher erläutert.

Fig. 3 zeigt die Dienststeuereinrichtung SCP, die Vermittlungsstelle SSP1 und das Dienstunterstützungssystem IP1, die untereinander Nachrichten austauschen. Die Vermittlungsstelle SSP2 und das Dienstunterstützungssystem IP2 sind hier nicht gezeigt, da in diesem Beispiel kein Nachrichtenaustausch zwischen diesen Einrichtungen und der Dienststeuereinrichtung SCP stattfindet.

Die Dienststeuereinrichtung SCP weist eine Tarifierungseinrichtung TAR, eine Steuereinrichtung CONTR und zwei Kommunikationseinrichtungen KOM1 und KOM2 auf. Die Kommunikationseinrichtung KOM1 tauscht mit der Vermittlungsstelle SSP1 Daten aus und sendet Daten an die Tarifierungseinrichtung TAR. Die Kommunikationseinrichtung KOM2 empfängt Daten von der Tarifierungseinrichtung TAR und sendet Daten an das Dienstunterstützungssystem IP1. Die Steuereinrichtung CONTR tauscht Daten mit der Tarifierungseinrichtung TAR und den Kommunikationseinrichtungen KOM1 und KOM2 aus.

Die Kommunikationseinrichtungen KOM1 und KOM2 stellen die für den Austausch von Daten mit der Vermittlungsstelle SSP2 bzw. dem Dienstunterstützungssystem IP1 notwendigen Kommunikationsdienste zur Verfügung. Die hierfür verwendeten Mechanismen können den oben angeführten Artikeln entnommen werden.

Die Tarifierungseinrichtung TAR bestimmt die Tarifierungsdaten T zu einem Verbindungswunsch. Sie weist eine Speichereinrichtung MEM und eine Bearbeitungseinrichtung CALC auf, die miteinander Daten austauschen.

In der Speichereinrichtung MEM sind Daten über die Tarife von Netzbetreibern und Dienstanbietern abgespeichert. Ein solcher Tarif besteht hierbei aus der Information, wieviel die Inanspruchnahme der angebotenen Kommunikationsdienstleistung pro Zeiteinheit zum aktuellen Zeitpunkt des Verbindungswunsches kostet. Ein solcher Tarif kann hierbei noch von einer Vielzahl von Parametern abhängen, beispielsweise von der Entfernung zwischen Sender und Empfänger, von dem Datum oder der Uhrzeit, von der Person des Senders oder des Empfängers oder vom Netzzustand. Diesen Tarifen sind jeweils Merkmale zugeordnet, die eine Zuordnung von Tarifen zu Verbindungswünschen ermöglichen. Beispielsweise kann ein solches Merkmal für einen Dienst oder für ein Netz eines Netzbetreibers in der Dienstkennung oder der Netzausscheidenummer bestehen.

Es ist auch möglich, daß die Speichereinrichtung MEM nicht in der Dienststeuereinrichtung SCP angesiedelt ist. Die in der Speichereinrichtung MEM abgelegten Daten wären dann beispielsweise in einer Datenbank abgespeichert, auf die die Bearbeitungseinheit CALC zugreifen würde. Es ist hierbei auch möglich, daß die Bearbeitungseinheit CALC diese Daten oder einen Teil dieser Daten direkt bei entsprechenden Datenbanken der verschiedenen Netzbetreiber und Dienstanbieter anfordert.

Die Bearbeitungseinrichtung CALC bestimmt mittels der Daten der Speichereinrichtung MEM die Tarifierungsdaten zu einem Verbindungswunsch. Ein Verbindungswunsch ist hierbei durch eine Rufnummer eines Teilnehmers des Kommunikationsnetzes KN spezifiziert.

Es ist jedoch auch möglich, daß ein Verbindungswunsch auf eine persönliche Identifikation eines Teilnehmers verweist und so durch diese spezifiziert wird. Dies ist beispielsweise beim Mobilfunk der Fall.

Die Bearbeitungseinrichtung CALC analysiert zuerst mittels der in der Speichereinrichtung MEM abgespeicherten Merkmale den Verbindungswunsch und bestimmt den Tarif oder die Tarife, die diesem Verbindungswunsch zugeordnet sind. Der Fall, daß einer Verbindung mehrere Tarife zugeordnet sind, kann beispielsweise dann eintreten, wenn Verbindungswege mehrerer Netzbetreiber belegt werden oder wenn die Verbindung einen kostenpflichtigen Dienst als Ziel hat. Zu den ermittelten Tarifen werden von der Bearbeitungseinrichtung CALC sodann die für den jeweiligen Tarif benötigten Parameter bestimmt. Die Entfernung zwischen den Teilnehmern A und B wird hier beispielsweise mittels der Nummern NA und NB bestimmt. Mit den Parametern werden dann die Kosten berechnet, die für die aufgebaute Verbindung pro Zeiteinheit zu entrichten wären. Diese Kosten werden als die Tarifierungsdaten T an die Kommunikationseinrichtung KOM1 weitergereicht.

Es ist auch möglich, daß die Bearbeitungseinrichtung CALC zusätzlich zu diesen Daten noch weitere Daten bestimmt und als Tarifierungsdaten weiterleitet. Solche Daten können beispielsweise den zu verwendenden Netzbetreiber oder die zu verwendende Übertragungsstrecke betreffen.

Die Steuereinrichtung CONTR steuert den Ablauf der Funktionen in der Dienststeuereinrichtung SCP sowie die Kommunikation zwischen der Dienststeuereinrichtung SCP und den Endgeräten des Kommunikationsnetzes KN.

Beim Empfang eines Verbindungswunsches durch die Kommunikationseinrichtung KOM1 veranlaßt sie dessen Weiterleitung an die Tarifierungseinrichtung TAR, die Bestimmung der Tarifierungsdaten und das Weiterleiten der Tarifierungsdaten über die Kommunikationseinrichtung KOM2 an das Dienstunterstützungssystem IP1. Nach Empfang der Nachricht ACKIP veranlaßt sie das Senden der Nachricht CONNB an die Vermittlungsstelle SSP1, wodurch der weitere Verbindungsaufbau veranlaßt wird.

Darüberhinaus ist es auch möglich, daß die Steuereinrichtung durch Senden von entsprechenden Steuerbefehlen über die Kommunikationseinrichtung KOM2 weitere Sprachansagen zur Benutzerführung oder zur Benutzerinformation veranlaßt. Solche Benutzerinformationen können beispielsweise in der Ansage von zur Zeit bestehenden Sonderangeboten für Kommunikationsdienste bestehen.

Es ist möglich, daß die Dienststeuereinrichtung SCP noch zusätzliche Einrichtungen zur Bestimmung von alternativen Verbindungswegen zu einem Verbindungswunsch enthält. Wenn solche alternativen Verbindungswege möglich sind, so würden zu jedem dieser Verbindungswege Tarifierungsdaten bestimmt und sodann der Verbindungsweg mit den geringsten Kosten ausgewählt. Es können jedoch auch die Tarifierungsdaten all dieser Verbindungswege an den entsprechenden Teilnehmer gesendet werden, der dann interaktiv einen der möglichen Verbindungswege auswählt.

Es ist auch möglich, daß zusätzliche Leistungsmerkmale, wie das Bestimmen des günstigsten Verbindungsweges durch interaktive Kommunikation zwischen Teilnehmer und Steuereinrichtung oder bereits durch die Wahl einer bestimmten Dienstkennung aktiviert werden können.

In einem zweiten Ausführungsbeispiel wird die Anwendung des erfindungsgemäßen Verfahrens zur Gebühreninformation eines Teilnehmers anhand einer Kommunikationsanordnung verdeutlicht, die aus einem erfindungsgemäßen Kommunikationsnetz mit einer erfindungsgemäßen Teilnehmervermittlungsstelle besteht.

Diese Kommunikationsanordnung ist wie nach Fig. 1 aufgebaut, mit der Ausnahme, daß der von dem Intelligenten Netzwerk IN erbrachte Dienst in die Teilnehmervermittlungsstelle EXA des Teilnehmers A integriert ist. Entsprechendes gilt für den Verbindungsaufbau des Teilnehmers A zum Teilnehmer B nach Fig. 2. Hier werden im Gegensatz zum ersten Ausführungsbeispiel die Tarifierungsdaten T direkt von der Teilnehmervermittlungsstelle EXA bestimmt und an das Endgerät TA gesendet.

Die Bereitstellung dieser Funktionen erfolgt hierbei ebenfalls durch ein Dienstunterstützungssystem und eine Dienststeuereinrichtung wie nach Fig. 3. Es ist jedoch auch möglich, die entsprechenden Funktionen nach Fig. 3 direkt in die Vermittlungsstelle EXA zu integrieren.

In einem dritten Ausführungsbeispiel wird die Funktionsweise eines erfindungsgemäßen Endgeräts erläutert, das für die Kommunikationsanordnung nach dem ersten Ausführungsbeispiel verwendet wird.

Die Kommunikationsanordnung ist wie nach Fig. 1 bis Fig. 3 aufgebaut. Anstelle des Endgeräts TA wird jedoch ein Endgerät TA' verwendet bei dem es sich um ein speziell für das erfindungsgemäße Verfahren zur Gebührenerfassung ausgelegtes Endgerät handelt.

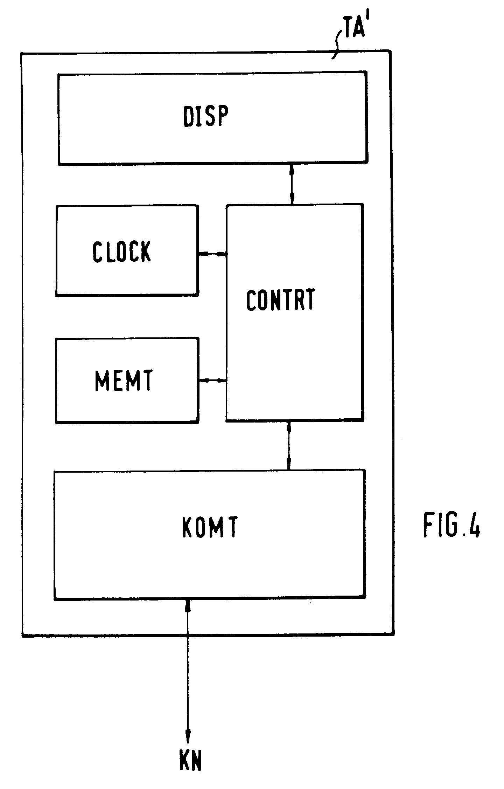

Die Fig. 4 zeigt das Endgerät TA'. Es weist eine Kommunikationseinrichtung KOMT, eine Steuereinrichtung CONTRT, einen Zeitgeber CLOCK, einen Speicher MEMT und eine Anzeigeeinrichtung DISP auf.

Die Steuereinrichtung CONTRT tauscht Daten mit der Kommunikationseinrichtung KOMT, mit der Speichereinrichtung MEMT, mit dem Zeitgeber CLOCK und mit der Anzeigeeinrichtung DISP aus. Die Kommunikationseinrichtung KOMT ist mit dem Kommunikationsnetz KN verbunden.

Die Kommunikationseinrichtung KOMT führt alle üblichen Kommunikationsfunktionen eines ISDN-Endgerätes durch. Sie verfügt so über die Einrichtungen zur Eingabe der Wahl informationen, führt die Teilnehmersignalisierung durch und stellt dem Teilnehmer einen oder mehrere Nutzkanäle zur Verfügung.

In der Speichereinrichtung MEMT werden von dem Kommunikationsnetz KN empfangene Tarifierungsdaten abgespeichert. Der Zeitgeber CLOCK sendet ein Zeitsignal an die Steuereinrichtung CONTRT. Die Anzeigeeinrichtung DISP besteht beispielsweise aus einer Flüssigkeitskristallanzeige, auf der Zahlen oder auch Texte darstellbar sind.

Es ist auch möglich, daß für die Speichereinrichtung MEMT, für den Zeitgeber CLOCK und für die Anzeigeeinrichtung DISP bereits in der Kommunikationseinrichtung KOMT vorhandene Einrichtungen verwendet werden.

Die Steuereinrichtung CONTRT dient der Steuerung der Gebührenerfassung im Endgerät TA'. Zwischen dem Signalisieren eines Verbindungswunsches durch die Kommunikationseinrichtung KOMT und dem Aufbau dieser Verbindung überwacht die Steuereinrichtung CONTRT den Signalisierungskanal, ob eine Nachricht mit Tarifierungsdaten vom Kommunikationsnetz KN gesendet wird. Eine Überwachung kann auch weiter während des Bestehens einer Verbindung erfolgen, z.B. wegen einer möglichen Veränderung eines Tarifs. Wird von der Kommunikationseinrichtung KOMT in diesem Zeitraum eine Nachricht empfangen und erkennt die Steuereinrichtung CONTRT in dieser Nachricht eine Nachricht mit Tarifierungsdaten, so entnimmt sie der Nachricht die Tarifierungsdaten und speichert sie in der Speichereinrichtung MEM ab.

Es ist auch möglich, daß die Nachricht im Nutzkanal in kodierter Form übertragen wird. Dies ist beispielsweise vorteilhaft, wenn das Endgerät TA' über ein ADSI-Interface (ADSI = Analog Display Service Interface) verfügt. Dies ist insbesondere dann notwendig, wenn es sich bei dem Endgerät TA' um kein ISDN-Endgerät handelt.

Es ist vorteilhaft, daß die Steuereinrichtung CONTRT nach dem Abspeichern der Tarifierungsdaten in der Speichereinrichtung MEMT deren Anzeige durch die Anzeigeeinrichtung DISP veranlaßt.

Sobald der Steuereinrichtung CONTRT durch die Kommunikationseinrichtung der Aufbau der gewünschten Verbindung gemeldet worden ist, beginnt sie die aufgelaufenen Gebühren zu berechnen. Für diese Berechnung multipliziert sie die in den Tarifierungsdaten aufgeführten Kosten pro Zeiteinheit mit der seit Aufbau der Verbindung verstrichenen Zeitdauer die sie mittels des Zeitsignals vom Zeitgeber CLOCK bestimmt. Diese Berechnung kann in regelmäßigen Abständen während des Bestehens der Verbindung bei Anforderung durch den Teilnehmer oder am Ende einer Verbindung durchgeführt werden. Nach der Anzeige werden die Kosten mittels der Anzeigeeinrichtung DISP dem Teilnehmer A angezeigt. Die Kosten können hierbei in einer beliebigen Einheit angezeigt werden.

Es ist auch möglich, daß keine Berechnung der Kosten erfolgt, sondern lediglich die vom Netzwerk KN empfangenen Gebührendaten angezeigt werden.

Es ist auch möglich, daß die Steuereinheit die Bereitstellung weiterer Leistungsmerkmale für die Gebühreninformation des Teilnehmers A steuert, insbesondere die Bereitstellung der nach Fig. 2 und Fig. 3 angeführten Leistungsmerkmale.

## Patentansprüche

1. Verfahren zur Information eines Teilnehmers (A) eines Kommunikationsnetzes (KN) über Gebühren einer gewünschten Verbindung, bei dem vom Teilnehmer (A) ein die gewünschte Verbindung spezifizierender Verbindungswunsch über ein Endgerät (TA) an das Kommunikationsnetz (KN) signalisiert wird,
**dadurch gekennzeichnet,** daß aus dem Verbindungswunsch Tarifierungsdaten (T), die die Kosten der gewünschten Verbindung betreffen, unabhängig vom Aufbau der gewünschten Verbindung ermittelt werden und daß die Tarifierungsdaten (T) an das Endgerät (TA) gesendet werden, bevor die gewünschte Verbindung aufgebaut ist.

2. Verfahren nach Anspruch 1, dadurch gekennzeichnet, daß der Verbindungswunsch an einen Dienst des Kommunikationsnetzes (KN) gerichtet wird, der die Tarifierungsdaten (T) ermittelt.

3. Verfahren nach Anspruch 1, dadurch gekennzeichnet, daß die Tarifierungsdaten (T) von der dem Teilnehmer zugeordneten Teilnehmervermittlungsstelle des Kommunikationsnetzes (KN) ermittelt werden.

4. Verfahren nach Anspruch 1, dadurch gekennzeichnet, daß die gewünschte Verbindung aufgebaut wird, wenn vom Endgerät eine Bestätigungsnachricht (ACK) an das Kommunikationsnetz (KN) gesendet worden ist.

5. Verfahren nach Anspruch 1, dadurch gekennzeichnet, daß die gewünschte Verbindung automatisch nach Senden der Tarifierungsdaten (T) an das Endgerät (TA) aufgebaut wird.

6. Verfahren nach Anspruch 1, dadurch gekennzeichnet, daß aus dem Verbindungswunsch Tarifierungsdaten (T) ermittelt werden, die die Kosten mehrerer möglicher Verbindungswege für die gewünschte Verbindung betreffen.

7. Verfahren nach Anspruch 6, dadurch gekennzeichnet, daß der günstigste der möglichen Verbindungswege als Verbindung ausgewählt wird.

8. Verfahren nach Anspruch 6, dadurch gekennzeichnet, daß der Teilnehmer (A) interaktiv über das Endgerät (TA) einen der möglichen Verbindungswege auswählt.

9. Dienststeuereinrichtung (SCP) mit einer Schnittstelle zur Kommunikation mit mindestens einer Vermittlungseinrichtung (SSP1, SSP2) eines Kommunikationsnetzes (KN),
**dadurch gekennzeichnet,** daß die Dienststeuereinrichtung (SCP) mit einer Steuereinrichtung (CONTR), mit einer Tarifierungseinrichtung (TAR) und mit einer Kommunikationseinrichtung (KOM1 + KOM2) zum Empfang von Verbindungswünschen von an das Kommunikationsnetz (KN) angeschlossenen Endgeräten (TA) über die Vermittlungseinrichtung (SSP1, SSP2) und zum Senden von Tarifierungsdaten (T) an diese Endgeräte (TA) über die Vermittlungseinrichtung (SSP1, SSP2) versehen ist, daß die Tarifierungseinrichtung (TA) so ausgestaltet ist, daß sie aus einem Verbindungswunsch Tarifierungsdaten, die die Kosten einer im Verbindungswunsch spezifizierten gewünschten Verbindung betreffen, unabhängig vom Aufbau der gewünschten Verbindung ermittelt und daß die Steuereinrichtung (CONTR) so ausgestaltet ist, daß sie das Senden der Tarifierungsdaten (T) an das Endgerät (TA) veranlaßt, bevor die gewünschte Verbindung aufgebaut ist.

10. Teilnehmervermittlungsstelle für ein Kommunikationsnetz, mit einer ersten Kommunikationseinrichtung zum Empfang von Verbindungswünschen von Endgeräten und mit einer zweiten Kommunikationseinrichtung zum Senden von Tarifierungsdaten an diese Endgeräte, **dadurch gekennzeichnet,** daß die Teilnehmervermittlungsstelle mit einer Tarifierungseinrichtung und einer Steuereinrichtung versehen ist, daß die Tarifierungseinrichtung so ausgestaltet ist, daß sie aus einem Verbindungswunsch Tarifierungsdaten, die die Kosten einer im Verbindungswunsch gewünschten Verbindung betreffen, unabhängig vom Aufbau der gewünschten Verbindung ermittelt, und daß die Steuereinrichtung so ausgestaltet ist, daß sie das Senden der Tarifierungsdaten (T) an das Endgerät (TA) veranlaßt, bevor die gewünschte Verbindung aufgebaut ist.

11. Endgerät (TA') für ein Kommunikationsnetz (KN), mit einer Kommunikationseinrichtung (KOMT) zum Austausch von Signalisierungsdaten und Nutzdaten mit dem Kommunikationsnetz (KN) und mit einer Ausgabeeinrichtung (DISP) zur Weitergabe von Informationen an einen Teilnehmer (A),
**dadurch gekennzeichnet,** daß das Endgerät (TA') mit einer Steuereinrichtung (CONTRT) versehen ist, die so ausgestaltet ist, daß sie vor dem Aufbau einer Verbindung von dem Kommunikationsnetz (KN) empfangene Tarifierungsdaten (T) als solche erkennt und ihre Ausgabe als Tarifierungsdaten durch die Ausgabeeinrichtung (DISP) veranlaßt.

12. Endgerät (TA') nach Anspruch 8, dadurch gekennzeichnet daß das Endgerät (TA') mit einem Zeitgeber (CLOCK) zur Erzeugung eines Zeitsignais versehen ist und daß die Steuereinrichtung (CONTRT) so ausgestaltet ist, daß sie die Tarifierungsdaten (T) speichert und aus den Tarifierungsdaten (T) mittels des Zeitsignals die Kosten der Verbindung nach deren Aufbau berechnet.

13. Kommunikationsnetz (KN) zum Anschluß von Endgeräten (TA, TB),
**dadurch gekennzeichnet,** daß das Kommunikationsnetz (KN) so ausgestaltet ist, daß aus einem Verbindungswunsch, der von einem Teilnehmer (A) über ein Endgerät (TA) an das Kommunikationsnetz (KN) signalisiert wird, unabhängig vom Aufbau der in dem Verbindungswunsch spezifizierten gewünschten Verbindung Tarifierungsdaten (T), die die Kosten der gewünschten Verbindung betreffen, ermittelt werden und an das Endgerät (TA) gesendet werden, bevor die gewünschte Verbindung aufgebaut ist.
